# EUROPEAN PATENT APPLICATION

(11) **EP 2 738 690 A1**
(43) Date of publication of application: **04.06.2014**
(21) Application number: 12820732.1
(22) Date of filing: 26.07.2012
(51) Int. Cl.: G06F 17/30

(54) **DOCUMENT MERGING METHOD**

(30) Priority: 29.07.2011 CN 201110215783
(71) Applicant: Yozosoft Co. Ltd., Jiangsu 214135 (CN)
(72) Inventor: DONG, Haoliang, Wuxi Jiangsu 214135 (CN)
(74) Representative: Sun, Yiming
(86) International application number: PCT/CN2012/079207
(87) International publication number: WO 2013/017036

(57) **Abstract**

The invention discloses a document merging method, which is configured to merge a plurality of initial documents formed on the basis of a same template. The template comprises a plurality of fragments, and each of the fragments has a set merging rule. The document merging method merges corresponding fragments in each initial document together according to the merging rules of the fragments to form a merged document. The fragments comprise one or more of rows, columns and cells in a table, and paragraphs, bookmarks and titles in a document. The merging rule comprises copy merging and eliminating repeated merging. The fragments in each initial document with the merging rule of copy merging are copied to the merged document in turn; and the fragments in each initial document with the merging rule of eliminating repeated merging are copied to the merged document in turn, and only one copy will be saved if repetition occurs.

## Description

### BACKGROUND OF THE INVENTION

### 1. Field of the Invention

The present invention relates to the field of office applications, particularly to a method for merging a plurality of documents into one document.

### 2. Description of Related Art

In the modern world, office software has been more involved in every aspect of the daily office work. Office software, such as Word, Excel and PPT, greatly promotes the implementation of paperless office. However, with the continuous development of internet and computer technology, providing a more efficient and faster office platform for users by networked office and cloud computing office becomes possible.

In the current daily office work in enterprises, a user often encounters a lot of inconvenience when processing documents of a same type. For example, a certain enterprise may have several departments and each of the departments has many employees. Supposed that every employee needs to write a *Work Summary* every week, the enterprise will face the following problems: first, it is quite tedious to distribute the template of *Work Summary* to every employee; second, it is difficult to manage and query quite a lot of documents *Work Summary* written by the employees over a period of time; and third, manual copy and paste is required when a manager needs to merge and make statistics of these documents *Work Summary,* and this process is tedious and error prone. Almost every enterprise has such problems that occur when documents such as weekly reports, monitoring Minutes, meeting minutes, learning reports are processed.

Therefore, it is expected to provide an improved document management method.

### SUMMARY OF THE INVENTION

A technical problem to be solved by the present invention is to provide a document merging method by which a plurality of documents written on the basis of a same template may be merged into a merged document.

Another technical problem to be solved by the present invention is to provide a document merging method by which a plurality of initial documents formed by a plurality of clients on the basis of templates may be merged into one or more merged documents according to the type of templates.

To solve the above problems, according to one aspect of the present invention, the present invention provides a document merging method for merging a plurality of initial documents formed on the basis of a same template. The template comprises a plurality of fragments, each of which has a set merging rule. The document merging method comprises the following step of: merging corresponding fragments in each initial document together according to the merging rules of the fragments to form a merged document.

Further, the fragments comprise one or more of rows, columns and cells in a table, and paragraphs, bookmarks and titles in a document.

Further, the merging rule includes copy merging and eliminating repeated merging, the fragments in each initial document with the merging rule of copy merging are copied to the merged document in turn; and the fragments in each initial document with the merging rule of eliminating repeated merging are copied to the merged document in turn, and only one copy will be saved when repetition occurs.

Further, the merging rule further includes statistic merging. For fragments with the merging rule of statistic merging, the numerical values in the fragments in each initial document are accumulated to the merged document.

Further, the merging rule further includes single merging and combined merging. For all fragments with the merging rule of single merging in an initial document, each of the fragments as a whole is merged with corresponding fragments in other initial documents; and for all fragments with the merging rule of combined merging in an initial document, all fragments as a whole are merged with corresponding fragments in other initial documents.

Further, there is one or two merging rules for each of the fragments. When one fragment has one merging rule, the merging rule is one of copy merging, eliminating repeated merging and statistic merging; and, when one fragment has two merging rules, one of the merging rules is one of copy merging, eliminating repeated merging and statistic merging, while the other merging rule is one of single merging and combined merging.

According to another aspect of the present invention, the present invention further provides another document merging method for merging documents written by a plurality of clients via a server. The document merging method comprises the following steps: each client uploads initial documents formed on the basis of a template to a server; and, the server analyzes merging rules in the initial documents on the basis of a same type of template, and merges the initial documents into a merged document according to the merging rules.

Further, when the initial documents are formed on basis of more than one template, when merging the initial documents, the server analyzes the type of the template in each initial document; classifies the initial documents according to the type of the template; analyzes the merging rule of one type of template; and, merges the initial documents on the basis of a same type of template into a merged document according to the merging rule of this type of template.

Further, the template comprises a plurality of fragments, each of which has a set merging rule; and the fragments comprise one or more of rows, columns and cells in a table, and paragraphs, bookmarks and titles in a document.

Further, when the initial documents on the basis of a same type of template are merged into a merged document, corresponding fragments in each initial document formed on the basis of the template are merged together according to the merging rules of the fragments to form a merged document.

Further, the merging rule includes one or two of copy merging, eliminating repeated merging, statistic merging, single merging and combined merging. For fragments with the merging rule of copy merging, the server copies the fragments in each initial document to the merged document in turn; for fragments with the merging rule of eliminating repeated merging, the server copies the fragments in each initial document to the merged document in turn, and saves only one copy when repetition occurs; for fragments with the merging rule of statistic merging, the server accumulates the numerical values in the fragments in each initial document to the merged document; for fragments with the merging rules of single merging in an initial document, the server merges each of the fragments as a whole with corresponding fragments in other initial documents; and for fragments with the merging rules of combined merging, the server merges all fragments as a whole with corresponding fragments in other initial documents.

Further, when merging the initial documents on the basis of a same type of template into a merged document, the server creates at first a blank document as the merged document.

Further, after customizing the template or importing a preset template, one client uploads the template to the server and then selectively shares the template with or sends the template to other clients.

Compared with the prior art, the document merging method in the invention may merge corresponding fragments in a plurality of initial documents written on the basis of a same template according to different merging rules. The template may be customized by users. The document merging method may also be implemented by a plurality of clients and at least one server, so that a client may customize a template on demand and selectively share the template with other clients, which is convenient to unify and distribute a same type of documents to various departments or branches. Then, the client may also merge the initial documents written on the basis of a same template into a merged document via the server, thereby achieving better document management.

### BRIEF DESCRIPTION OF THE DRAWINGS

The present invention will be better understood with reference to the accompanying drawings and the following detailed description, in which like reference symbols designate the same or similar parts. In the figures:
FIG. 1 is a flowchart of a document merging method according to one embodiment of the present invention;
FIG. 2 is a structure diagram of an implementation environment of a document merging method according to one embodiment of the present invention;
FIG. 3 is a structure diagram of a template according to one embodiment of the present invention;
FIG. 4 is a structure diagram of a merged document according to one embodiment of the present invention;
Fig. 5 is a structure diagram of an initial document list according to one embodiment of the present invention; and
Fig. 6 is a flowchart of a document merging method according to another embodiment of the present invention.

### DETAILED DESCRIPTION OF THE INVENTION

To make the above objects, characteristics and advantages of the present invention clearer, the present invention will be described as below in details with reference to the accompanying drawings and specific implementations.

The detailed description of the invention is presented largely in terms of procedures, steps, logic blocks, processes, and other symbolic descriptions that directly or indirectly resemble the operations of the present invention. These descriptions and representations are typically used by those skilled in the art to most effectively convey the substance of their work to others skilled in the art.

Reference herein to "one embodiment" or "an embodiment" means that a particular feature, structure, or characteristic described in connection with the embodiment can be included in at least one implementation of the present invention. The appearances of the phrase "in one embodiment" in various places in the specification are not necessarily all referring to the same embodiment, nor are separate or alternative embodiments mutually exclusive of other embodiments. Further, the order of modules in methods, flowcharts or functional diagrams representing one or more embodiments of the present invention does not inherently indicate any particular order nor imply any limitations in the present invention.

The document merging method in the present invention may be implemented as a system, a module or a part of a system via software, hardware or combinations thereof. The document merging method may merge a plurality of documents written on the basis of a same template into a merged document.

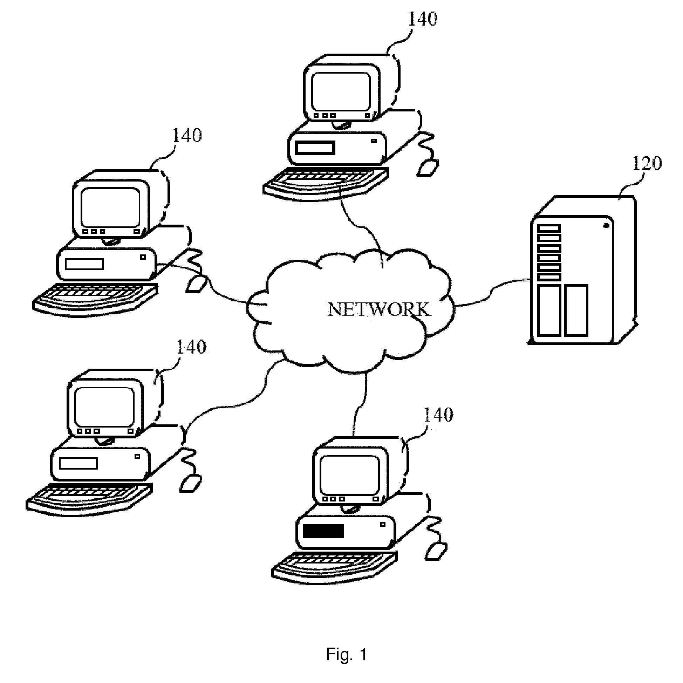

Referring to Fig. 1, a structure diagram of an implementation environment of a document merging method in one embodiment 100 of the present invention is shown. The implementation environment 100 comprises a server 120 and a number of clients 140 connected with the server 120 over the network. The network may include a Local Area Network (LAN), a Wide Area Network (WAN), a mobile communication network, a Public Switched Telephone Network (PSTN) or combinations thereof. For simplicity, Fig. 1 only shows four clients 140 and one server 120, but it may be recognized that there may be more clients and more servers in practices.

An initiator, for example, a manager or project director, may customize a template via a client 140 or import an existing template, then upload the template to the server 120, and selectively share the template with or send the template to other clients 140 of participants. The template usually is a spreadsheet, a Word file containing spreadsheets or bookmarks, a form file of a predetermined format, etc. In a specific embodiment, the template may be a blank template of *Weekly Meeting Minutes of Each Department,* a blank template of *Daily Work Report,* a blank template of *Weekly Learning Summary,* etc.

A participant, for example, an employee or engineer, may download or receive the template shared by the initiator from the server 120 via the client 140, then write an initial document on the basis of the template, and upload the initial document written on the basis of the template to the server 120 to share with or send it to the corresponding initiator. During the writing of an initial document on the basis of the template, when the client 140 is a Wed client, the participant may directly edit the initial document on line via an online edit functional module within the client 140; and, when the client 140 is a client of C/S structure, the participant may directly download the template to the local folder, then edit the initial document via local office software, and upload the initial document to the server 120.

The server 120 stores various documents uploaded by the clients 140. The documents comprise templates, initial documents and merged documents. On one hand, the server 120 controls the permission of a user of each client to use each document according to the settings of the initiator and the participants when sharing (or sending) the related documents, the permission comprising view, download, read-only, edit, revise, check, print, copy, etc; and on the other hand, the server 120 may merge all or parts of initial documents written on the basis of a same template into a merged document according to the choice of a user, and the initial documents to be merged may be specified by the user via the client 140.

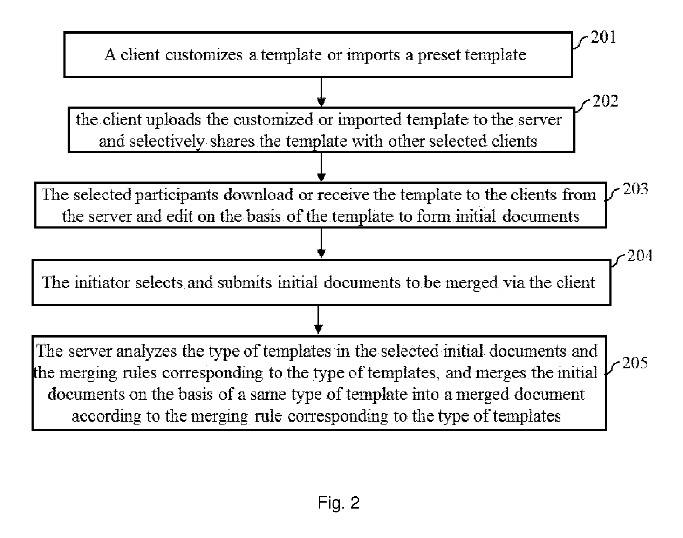

To describe every aspect of the present invention in details, please continue to refer to Fig. 2. Fig. 2 shows a flowchart of a document merging method in one embodiment 200 of the present invention. The document merging method 200 comprises the following steps:
S201: A client customizes a template or imports a preset template.

An initiator, for example, a manager or project director, may customize a template via a client 140 or import an existing template. The template usually is a spreadsheet, a Word file containing spreadsheets or bookmarks, a form file of a predefined format, etc. The initiator may set a plurality of fragments that may be edited by participants within the template. For example, supposed that the template is a sheet, the fragment may be a row, column or cell in the sheet; still for example, supposed that the template is a document containing bookmarks or paragraphs, the fragment is a bookmark or the content in a paragraph.

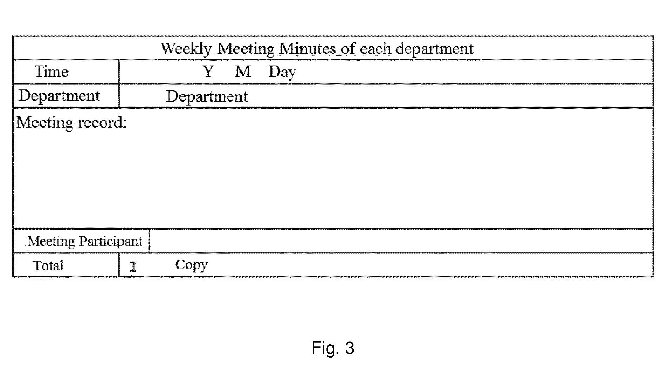

Specifically, supposed that the template is a blank template of *Weekly Meeting Minutes of Each Department* as shown in Fig. 3, each row in the template is a fragment set by the initiator. Meanwhile, the initiator may also set the merging rule of each fragment in the template during the merging. The merging rule of one fragment may include one or two of copy merging, eliminating repeated merging, statistic merging, single merging and combined merging. During the merging, for fragments with the merging rule of copy merging, the server copies the fragments in each initial document to the merged document in turn, the copy merging being mainly applicable to different contents in each initial document. For fragments with the merging rule of eliminating repeated merging, the server copies the fragments in each initial document to the merged document in turn, and saves only one copy when repetition occurs, the eliminating repeated merging being mainly applicable to same contents in each initial document. For fragments with the merging rule of statistic merging, the server accumulates the numerical values in the fragments in each initial document to the merged document, the statistic merging being mainly applicable to numerical contents required to be accumulated in each initial document. In addition, single merging is mainly applicable to fragments required to be merged separately in each initial document, while combined merging is mainly applicable to fragments required to be merged in combination in each initial document. Specifically, for fragments with the merging rule of single merging in an initial document, the server merges each of the fragments as a whole with corresponding fragments in other initial documents; and, for fragments with the merging rule of combined merging, the server merges all fragments as a whole with corresponding fragments in other initial documents.

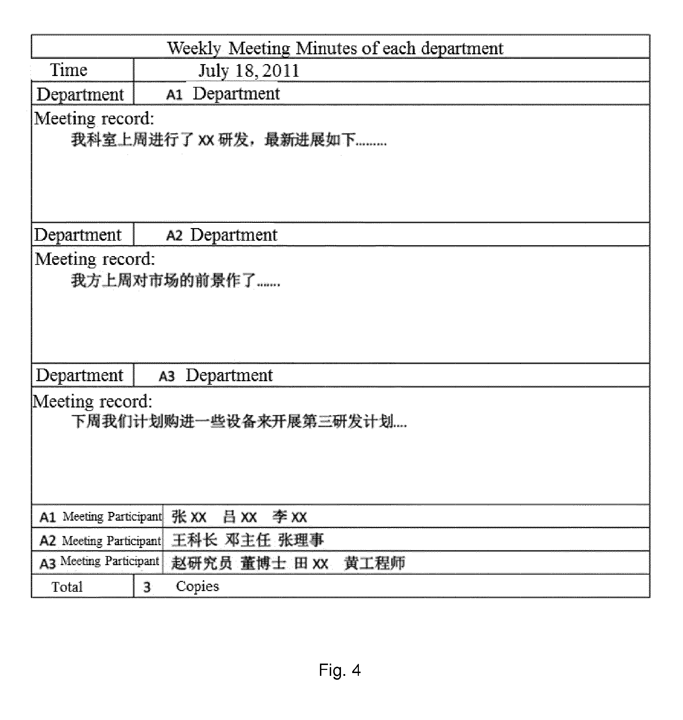

Taking a blank template of *Weekly Meeting Minutes of Each Department* shown in Fig. 3 as example, the merging rule of the "Title" column "Weekly Meeting Minutes of Each Department" in the first row may be set as "single merging" plus "eliminating repeated merging". In this way, after merging, the "Title" column as a whole will be merged separately at first, and only one row will be saved after the repeated merging is eliminated. The schematic diagram after merging may refer to Fig. 4. The merging rule of the "Time" bar in the second row may be set as "single merging" plus "eliminating repeated merging". In this way, when a plurality of initial documents *Weekly Meeting Minutes of Each Department* written on a same day are merged, the second row will be merged separately at first, and only one row will be saved after the repeated merging is eliminated because all initial documents are written on the same day. The merging rule of the "Department" column in the third row and the "Meeting Content" column in the fourth row may be set as 'combined merging" plus "copy merging". In this way, when a plurality of initial documents *Weekly Meeting Minutes of Each Department* written on the same day are merged, the "Department" column in the second row and the "Meeting Content" column in the third row in each initial document as a whole will be merged with the "Department" column in the second row and the "Meeting Content" column in the third row in other initial documents; furthermore, the related information in each initial document will be saved after the copy merging, and displayed in the merged document according to the order for merging the initial documents. The merging rule of "Participants of XX Department" column in the fifth row may be set as "single merging" plus "copy merging". In this way, at the end of merging, this row will be displayed below the final "Meeting Content" in the merged document according to the order for merging the initial documents. The merging rule of "Total Copies" cell in the sixth row may be set as "single merging" plus "eliminating repeated merging". In this way, in the merged document, this cell will be merged and only one cell will be saved. The merging rule of "1" cell in the sixth row may be set as "single merging" plus "statistic merging". In this way, in the merged document, the numerical value in the cell will be the total number of all the merged initial documents. In conclusion, a user may design the template on demand, and set the merging rule of each fragment in the template by popping up corresponding menu by right-click, hiding domain settings or in other ways when designing or customizing the template. At the end of setting, a client may automatically generate unique identity information representing the type of the template according to the fragments, merging rules in the template or other information, to be convenient for the analysis of the server. Certainly, the client may also directly import an edited template provided by the other party instead of customizing the template. Furthermore, in a specific embodiment, there may be one or two merging rules for each of the fragments. When one fragment has one merging rule, the merging rule is one of copy merging, eliminating repeated merging and statistic merging; and when one fragment has two merging rules, one of the merging rules is one of copy merging, eliminating repeated merging and statistic merging, while the other merging rule is one of single merging and combined merging. For the convenience of users, the merging rule of one fragment may also be named as "merging by row first", "merging by column first", "merging by document first" and so on. For example, if a user expects to set the merging rule of a row and the merging rule includes "single merging" plus "copy merging", it is just required to set the merging rule of the row as "merging by row first".

S202: A client uploads the customized or imported template to the server, and selectively shares the template with other selected clients.

After having customized a template or imported a ready-made template, an initiator may upload the template to the server via a client, and then share the template with or send the template to the selected clients. These clients usually correspond to a plurality of different participants. In one embodiment, if the initiator shares the template with other clients, the initiator may also give the related permissions of the template to the clients of the selected participants via clients, for example, permissions to view, download, edit, check, revise, print, copy the template and the like.

S203: The selected participants download or receive the template to the clients from the server, and edit on the basis of the template to form initial documents.

When a client is a Web client, a participant may directly download and open the template from a browser and then edit the template. When a client is a C/S client, a participant may download the template, edit the template via local desktop office software to form an initial document, then import the formed initial document into the client and upload it to the server to share it with or send it to the initiator. When sharing the template with the initiator, a participant may also give the related permissions of the template to the client of the initiator via a client, for example, permissions to view, download, edit, check, revise, print, copy the template and the like.

S204: The initiator selects and submits initial documents to be merged via the client.

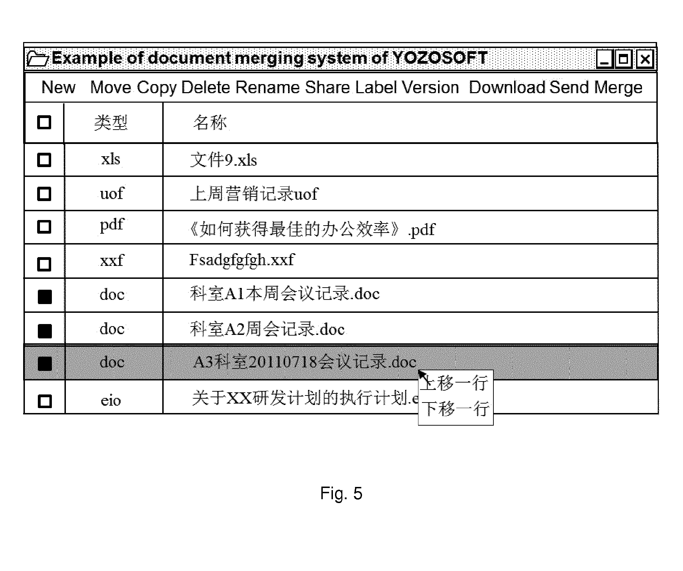

The initiator may view a document list of a plurality of initial documents in the server via the client, and may sort and select the plurality of initial documents via the client. When needing to merge a number of initial documents, the initiator may select all or parts of the initial documents and then sort these initial documents according to an expected order of merging. For example, as shown in Fig. 5, a user may sort the selected initial documents by "Move Up" or "Move Down" in a right-click popup menu, and then submit the selection and sorting information to the server via the button "Merge" at the end of sorting.

S205: The server analyzes the type of templates in the selected initial documents and the merging rules corresponding to the type of templates, and merges the initial documents formed on the basis of a same type of template into a merged document according to the merging rule corresponding to the type of template.

After receiving the selection and sorting information submitted by the initiator about a number of initial documents, the server may analyze the type of templates in these selected initial documents at first. This process may be implemented by identifying the unique identity information representing the type of templates in the initial documents. Generally, the type of templates in the selected initial documents is the same. However, if there are two or more types of templates in the initial documents selected by the initiator, the server may classify the initial documents according to different types of templates and then select and merge a number of initial documents on the basis of a same type of template in turn. When a number of initial documents on the basis of a same type of template are merged, the server merges a number of initial documents on the basis of another type of template until all the selected initial documents are merged. When merging a number of initial documents on the basis of a same type of template, the server may analyze the merging rule corresponding to said type of template, and then merge all initial documents written on the basis of said type of template into a merged document according to the merging rule corresponding to said type of template. During the merging, the server may create a blank document at first, and then begin to merge according to the merging rule from the first fragment in the first initial document in the sorting order of the user. After the related fragments in other initial documents corresponding to the first fragment are merged to the blank document, the server begins to merge the second fragment in the first initial document, and so forth, until the merging is completed. At the end of merging, the initiator may name and store the merged document.

In one specific embodiment, a blank template of *Weekly Meeting Minutes of Each Department* shown in Fig. 3 and a document list shown in Fig. 5 are taken as example. It is supposed that the initiator selects three initial documents, i.e., *Weekly Meeting Minutes of Department A1, Weekly Meeting Minutes of Department A2* and *Meeting Minutes of Department A3 on Jul. 18, 2011,* for merging, and sorts the three documents according to an order of *Department A1, Department A2* and *Department A3.* The server analyzes information about the template of these three documents at first, and then identifies that these three initial documents belong to a same template. Then, the server analyzes the merging rules in the first initial document *Weekly Meeting Minutes of Department A1,* and creates a blank document to get ready for merging. This blank document will become the merged document after merging.

After analyzing the merging rule, the server first begins to merge the first fragment in the first initial document *Weekly Meeting Minutes of Department A1.* Because the first fragment in *Weekly Meeting Minutes of Department A1* is "Weekly Meeting Minutes of Each Department" in the first row and the merging rule thereof is "single merging" plus "eliminating repeated merging", the server copies "Weekly Meeting Minutes of Each Department" in the first row to the new blank document at first, and then processes the first fragment in other two initial documents. The server does not copy the first fragments in other two initial documents to the merged document after the "eliminating repeated merging".

Then, the server begins to merge the second fragment in the first initial document *Weekly Meeting Minutes of Department A1.* Because the second fragment in *Weekly Meeting Minutes of Department A1* is "Time" column in the second row and the merging rule thereof is "single merging" plus "eliminating repeated merging", the server copies the "Time" column in the second row to the merged document at first, and then processes the second fragment in other two initial documents. Furthermore, the server does not copy the second fragments in other two initial documents to the merged document after the "eliminating repeated merging".

Then, the server begins to merge the third fragment in the first initial document *Weekly Meeting Minutes of Department A1.* Because the third fragment in *Weekly Meeting Minutes of Department A1* is "Department" column in the third row and the merging rule thereof is "combined merging" plus "copy merging", the server searches fragment "Meeting Content" column in the fourth row with the same merging rule "combined merging" in *Weekly Meeting Minutes of Department A1,* and then copies the "Department" column in the third row and the "Meeting Content" column in the fourth row as a whole to the merged document. And then, the server processes the third fragment and fourth fragment in other two initial documents. Furthermore, because the merging rule is "copy merging", the server directly copies the third fragment and fourth fragment in other two initial documents as a whole to the merged document.

The server continues to merge the fifth fragment in the first initial document *Weekly Meeting Minutes of Department A1.* Because the fifth fragment in *Weekly Meeting Minutes of Department A1* is "Participants of XX Department" column in the fifth row, and the merging rule thereof is "single merging" plus "copy merging", the server copies the "Participants of XX Department" column in the fifth row in the three initial documents to the merged document.

The server continues to merge the sixth fragment in the first initial document *Weekly Meeting Minutes of Department A1.* Because the sixth fragment in *Weekly Meeting Minutes of Department A 1* is "Total" cell in the sixth row and the merging rule thereof is "single merging" plus "eliminating repeated merging", the server copies the "Total" cell in the sixth row to the merged document at first, and then processes the sixth fragment in other two initial documents. Furthermore, the server does not copy the "Total" cell in the sixth row in other two initial documents to the merged document after the "eliminating repeated merging".

Finally, the server begins to merge the seventh fragment in the first initial document *Weekly Meeting Minutes of Department A1.* Because the seventh fragment in *Weekly Meeting Minutes of Department A1* is "1" cell in the sixth row and the merging rule thereof is "single merging" plus "statistic merging", the server copies the "1" cell in the sixth row to the merged document at first, and then processes the seventh fragment in other two initial documents. Furthermore, the server accumulates the "1" cell in the sixth row in other two initial documents to the merged document after "statistic merging". Fig. 4 shows the finally merged result.

In conclusion, the document merging method enables a user to customize a template on demand and selectively share the template with other clients, which is convenient to unify and distribute initial documents written on the basis of a same template to various departments or branches. Moreover, a client may also merge the initial documents written on the basis of a same template into a merged document via a server, thereby achieving better document management. It should be noted that, although the forgoing document merging method has been described taking "Clients" plus "Servers" as preferred embodiments, the document merging method may also be applied to only one computer or other information processing equipment. The computer or other information processing equipment comprises a number of initial documents written on the basis of a same template therein.

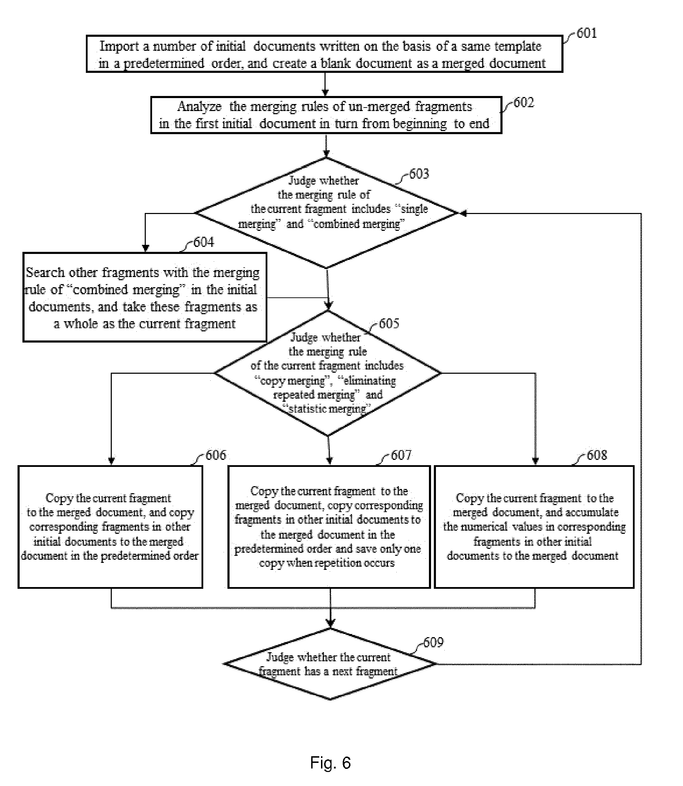

Referring to Fig. 6, a flowchart of a document merging method in one embodiment 600 of the present invention is shown. The document merging method 600 comprises the following steps of:
S601: importing a number of initial documents written on the basis of a same template in a predetermined order, and creating a blank document as a merged document;
S602: analyzing the merging rules of un-merged fragments in the first initial document in turn from beginning to end;
S603: judging whether the merging rule of the current fragment includes "single merging" and "combined merging"; if the merging rule of the current fragment includes "combined merging", proceeding to S604; if the merging rule of the current fragment does not include "single merging" and "combined merging" or includes "single merging", proceeding to S605;
S604: searching other fragments with the merging rule of "combined merging" in the initial documents, and taking these fragments as the current fragment as a whole;
S605: judging whether the merging rule of the current fragment includes "copy merging", "eliminating repeated merging" and "statistic merging"; if the merging rule of the current fragment includes "copy merging", proceeding to S606; if the merging rule of the current fragment includes "eliminating repeated merging", proceeding to S607; and, if the merging rule of the current fragment includes "statistic merging", proceeding to S608;
S606: copying the current fragment to the merged document, and copying corresponding fragments in other initial documents to the merged document in the predetermined order; and then proceeding to S609;
S607: copying the current fragment to the merged document, copying corresponding fragments in other initial documents to the merged document in the predetermined order and saving only one copy when repetition occurs; and then proceeding to S609;
S608: copying the current fragment to the merged document, and accumulating the numerical values in corresponding fragments in other initial documents to the merged document; and then proceeding to S609; and
S609: judging whether the current fragment has a next fragment; if so, taking the un-merged fragment next to the current fragment as the current fragment, and returning to S603; and if not, ending the process.

Apparently, a template at least comprises one fragment, and one fragment at least has one merging rule. This merging rule may be one of copy merging, eliminating repeated merging and statistic merging. One fragment may also have two merging rules. When one fragment has two merging rules, one merging rule is one of copy merging, eliminating repeated merging and statistic merging, while the other merging rule is one of single merging and combined merging.

The present invention has been described in sufficient details with a certain degree of particularity. It is understood by those skilled in the art that the description of embodiments has been made by way of examples only and that numerous changes made without departing from the spirit and scope of the invention as claimed shall fall into the protection scope of the present invention. Accordingly, the scope of the present invention is defined by the appended claims rather than the foregoing description of embodiments.

## Claims

1. A document merging method configured to merge a plurality of initial documents formed on the basis of a same template comprising a plurality of fragments each having a set merging rule, the document merging method comprising:
merging corresponding fragments in each initial document together according to the merging rules of the fragments to form a merged document.

2. The document merging method according to claim 1, wherein the fragments is one or more of rows, columns and cells in a table, and paragraphs, bookmarks and titles in a document.

3. The document merging method according to claim 1, wherein the merging rule includes copy merging and eliminating repeated merging,
and wherein the fragments in each initial document with the merging rule of copy merging are copied to the merged document in turn, and the fragments in each initial document with the merging rule of eliminating repeated merging are copied to the merged document in turn and only one copy will be saved when repetition occurs.

4. The document merging method according to claim 3, wherein the merging rule further includes statistic merging,
the numerical values in the fragments in each initial document with the merging rule of statistic merging are accumulated to the merged document.

5. The document merging method according to claim 3 or 4, wherein the merging rule further includes single merging and combined merging,
and wherein each of the fragments as a whole is merged with corresponding fragments in other initial documents for all fragments with the merging rule of single merging in an initial document, and all fragments as a whole are merged with corresponding fragments in other initial documents for all fragments with the merging rule of combined merging in an initial document.

6. The document merging method according to claim 5, wherein there is one or two merging rules for each of the fragments,
when one fragment has one merging rule, the merging rule is one of copy merging, eliminating repeated merging and statistic merging; and
when one fragment has two merging rules, one of the merging rules is one of copy merging, eliminating repeated merging and statistic merging, while the other merging rule is one of single merging and combined merging.

7. A document merging method, which merges documents written by a plurality of clients via a server, the document merging method comprising:
uploading initial documents formed on the basis of a template to a server by each client; and
analyzing merging rules in the initial documents on the basis of a same type of template, and merging the initial documents into a merged document according to the merging rules by the server.

8. The document merging method according to claim 7, wherein when the initial documents are formed on basis of more than one template, the merging the initial documents comprises:
analyzing the type of the template in each initial document;
classifying the initial documents according to the type of the template;
analyzing the merging rule of one type of template; and
merging the initial documents on the basis of a same type of template into a merged document according to the merging rule of this type of template.

9. The document merging method according to claim 8, wherein the template comprises a plurality of fragments each having a set merging rule, and the fragments is one or more of rows, columns and cells in a table, and paragraphs, bookmarks and titles in a document.

10. The document merging method according to claim 9, wherein when the initial documents on the basis of a same type of template are merged into a merged document, corresponding fragments in each initial document formed on the basis of the template are merged together according to the merging rules of the fragments to form the merged document.

11. The document merging method according to claim 10, wherein the merging rule includes one or two of copy merging, eliminating repeated merging, statistic merging, single merging and combined merging,
and wherein the server copies the fragments in each initial document to the merged document in turn;
for fragments with the merging rule of eliminating repeated merging, the server copies the fragments in each initial document to the merged document in turn, and saves only one copy when repetition occurs;
for fragments with the merging rule of statistic merging, the server accumulates the numerical values in the fragments in each initial document to the merged document;
for fragments with the merging rules of single merging in an initial document, the server merges each of the fragments as a whole with corresponding fragments in other initial documents; and
for fragments with the merging rules of combined merging, the server merges all fragments as a whole with corresponding fragments in other initial documents.

12. The document merging method according to any one of claims 7 to 10, wherein when merging the initial documents on the basis of a same type of template into a merged document, the server creates at first a blank document as the merged document.

13. The document merging method according to any one of claims 7 to 10, wherein after customizing the template or importing a preset template, one client uploads the template to the server and then selectively shares the template with or sends the template to other clients.
